# EUROPEAN PATENT APPLICATION

(11) **EP 4 799 741 A1**
(43) Date of publication of application: **02.09.2026**
(21) Application number: 24882290.0
(22) Date of filing: 17.10.2024
(51) Int. Cl.: B06B 1/04, H02K 33/02

(54) **VIBRATION ACTUATOR AND VIBRATION PRESENTATION DEVICE**

(30) Priority: 27.10.2023 JP 2023184891
(71) Applicant: Minebea Mitsumi Inc., Kitasaku-gun, Nagano 3890293 (JP)
(72) Inventor: KINOSHITA, Yosuke, Tama-shi, Tokyo 206-8567 (JP); SATO, Soichi, Tama-shi, Tokyo 206-8567 (JP)
(74) Representative: Epping - Hermann - Fischer
(86) International application number: PCT/JP2024/037055
(87) International publication number: WO 2025/089177

(57) **Abstract**

This vibration presentation device includes: a fixed part having a magnetic force generation portion in which a plate-shaped magnetic core is inserted into a coil to make both ends of the magnetic core protrude from the coil, and a base portion to which the magnetic force generation portion is fixed in a state in which both ends overlap with the upper surface; a movable part having a plate-shaped magnetic member opposing both ends from above in a surface orthogonal direction that is orthogonal to the upper surface, and a weight portion arranged on a lower surface of the magnetic member at a position avoiding the magnetic force generation portion; and an elastic body which is a frame-shaped body having a first opposing side and a second opposing side surrounding the movable part, connected to the movable part by a pair of first connection parts of the first opposing side, and connected to the fixed part by a pair of second connection parts of the second opposing side. The movable part is displaced and vibrated so as to be made to approach the fixed part by magnetic force generated by conduction to the coil.

## Description

### Technical Field

The present invention relates to a vibration actuator and a vibration presentation device including the vibration actuator.

### Background Art

Various configurations for imparting vibrations generated by an electromagnetic mechanism as a haptic sensation or an operational feel (hereinafter, collectively referred to as "haptic sensation") to a finger pad of an operator or the like that comes into contact with an operation panel (hereinafter, simply also referred to as "panel") such as a touch panel are known, for example, from PTLs 1 and 2.

The vibration actuator described in PTL 1 has a configuration in which a guide shaft is disposed perpendicular to a panel surface, a movable magnet and a fixed coil are respectively disposed on the inner and outer sides in the radial direction of the shaft, and the movable magnet is caused to reciprocate along the guide shaft. Accordingly, the device itself requires a certain minimum height.

The vibration actuator (vibration presentation device) described in PTL 2 has a configuration in which a center yoke is disposed perpendicular to the panel surface, and a movable coil and a fixed magnet are disposed on the inner and outer sides in the radial direction of the shaft. In addition, a support section that supports the panel by surrounding the outer periphery thereof with a standing wall is disposed, and the movable coil is caused to reciprocate along the center yoke on the inner side of the support section. Accordingly, the device itself also requires a certain minimum height. Furthermore, the vibration actuators described in PTLs 1 and 2 use magnets (permanent magnets), which presents challenges in terms of manufacturing cost and ease of manufacturing.

### Citation List

### Patent Literature

PTL 1
   Japanese Patent Application Laid-Open No. 2015-070729
PTL 2
   Japanese Patent Application Laid-Open No. 2016-163854

### Summary of Invention

### Technical Problem

Further miniaturization and thinning of the conventional vibration actuators described above are desired.

In addition, since higher output is also desired for conventional vibration actuators, PTL 2 discloses a configuration in which the coil is disposed on the movable portion side to increase the weight of the movable portion, thereby enabling higher output; however, the wiring needs to be routed so as not to cause interference, which also presents a challenge in terms of ease of manufacturing.

An object of the present invention is to provide a vibration actuator and a vibration presentation device that ensure the thinness of the entire device while vibrating stably with high output.

### Solution to Problem

A vibration actuator according to the present invention includes: a fixed portion including: a magnetic force generation section in which a magnetic core having a plate shape is inserted through a coil and both end portions of the magnetic core protrude from the coil; and a base portion to which the magnetic force generation section is fixed such that the both end portions overlap with an upper surface of the base portion; a movable portion including: a magnetic member having a plate shape and facing the both end portions from above in a normal direction perpendicular to the upper surface; and a weight portion disposed on a lower surface of the magnetic member at a position avoiding the magnetic force generation section; and an elastic body that is a frame-shaped body including a first pair of opposite sides and a second pair of opposite sides surrounding the movable portion, is connected to the movable portion at a pair of first connecting portions of the first pair of opposite sides, and is connected to the fixed portion at a pair of second connecting portions of the second pair of opposite sides, in which the movable portion is displaced and vibrates so as to approach the fixed portion by a magnetic force generated by energization of the coil.

A vibration presentation device according to the present disclosure is a vibration presentation device in which the vibration actuator with the above configuration is disposed on a back side of an operation surface, the coil is energized in response to a touch operation of a user on the operation surface, and the movable portion is displaced so as to approach the fixed portion to present vibration.

### Advantageous Effects of Invention

According to the present invention, it is possible to ensure the thinness of the entire device and to stably vibrate with high output.

### Brief Description of Drawings

[FIG. 1] FIG. 1 is an external perspective view of a vibration actuator according to Embodiment 1 of the present invention;
[FIG. 2] FIG. 2 is a bottom view of the vibration actuator;
[FIG. 3] FIG. 3 is an exploded perspective view showing a configuration of a main part of the vibration actuator;
[FIG. 4] FIG. 4 is an exploded perspective view of the vibration actuator;
[FIG. 5] FIG. 5 is a perspective view of a core body of the vibration actuator as viewed from below;
[FIG. 6] FIG. 6 is an exploded perspective view of the core body;
[FIG. 7] FIG. 7 is a cross-sectional view taken along line A-A in FIG. 1;
[FIG. 8] FIG. 8 is a cross-sectional view taken along line B-B in FIG. 1;
[FIG. 9] FIG. 9 is a diagram for describing a magnetic circuit of the vibration actuator;
[FIG. 10] FIG. 10 is a diagram illustrating a circuit configuration of a control section of the vibration actuator;
[FIG. 11] FIG. 11 is an external perspective view of a vibration actuator according to Embodiment 2 of the present invention;
[FIG. 12] FIG. 12 is a bottom view of the vibration actuator;
[FIG. 13] FIG. 13 is an exploded perspective view showing a configuration of a main part of the vibration actuator;
[FIG. 14] FIG. 14 is an exploded perspective view of the vibration actuator;
[FIG. 15] FIG. 15 is a perspective view of a core body of the vibration actuator as viewed from below;
[FIG. 16] FIG. 16 is an exploded perspective view of the core body;
[FIG. 17] FIG. 17 is a cross-sectional view taken along line C-C in FIG. 11;
[FIG. 18] FIG. 18 is a cross-sectional view taken along line D-D in FIG. 11; and
[FIG. 19] FIG. 19 is a diagram illustrating an example of a vibration presentation device including the vibration actuator.

### Description of Embodiments

Hereinafter, a device according to embodiments of the present invention will be described with reference to the drawings.

In each of the embodiments to be described below, an orthogonal coordinate system (X, Y, Z) is used. The lengths in the X direction, the Y direction, and the Z direction are described as respectively corresponding to the width (right-left direction, longitudinal direction) of a vibration actuator and a vibration presentation device, the depth (front-rear direction, transverse direction) thereof, and the height (up-down direction) thereof. The correspondence relationship regarding those directions is naturally not limited thereto and may be different depending on the usage mode of the vibration actuator and the vibration presentation device. In terms of the Z direction, the positive side in the Z direction (upper side) is a direction in which the vibration feedback is provided to an operator, and the negative side in the Z direction (lower side) is a direction in which the operator presses when the operator performs an operation.

The expression related to a shape used in the description of each embodiment is a convenient expression for promoting the understanding of the content, and the shape itself adopted in each embodiment is merely an example, and can be variously modified and adopted.

### (Embodiment 1)

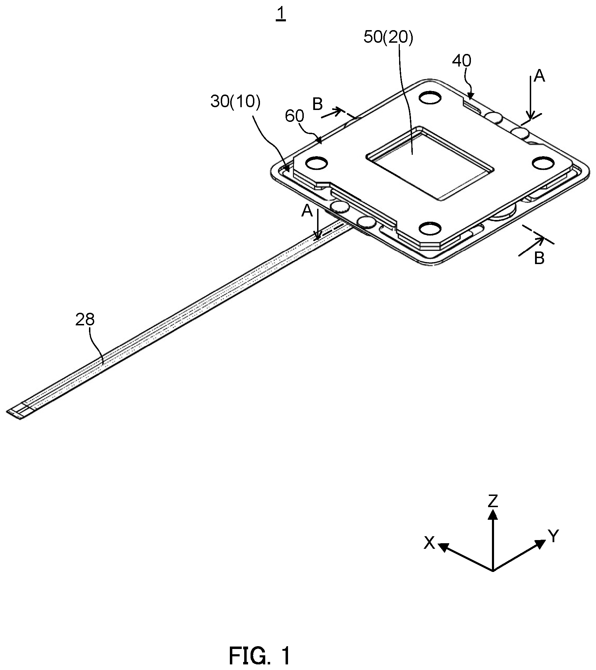

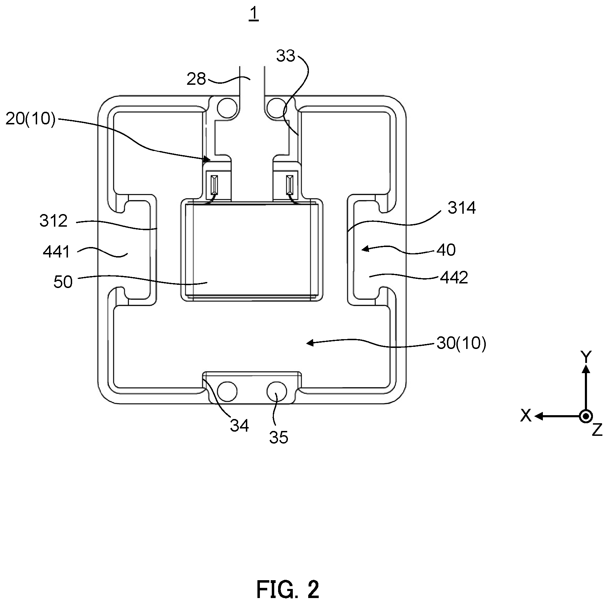

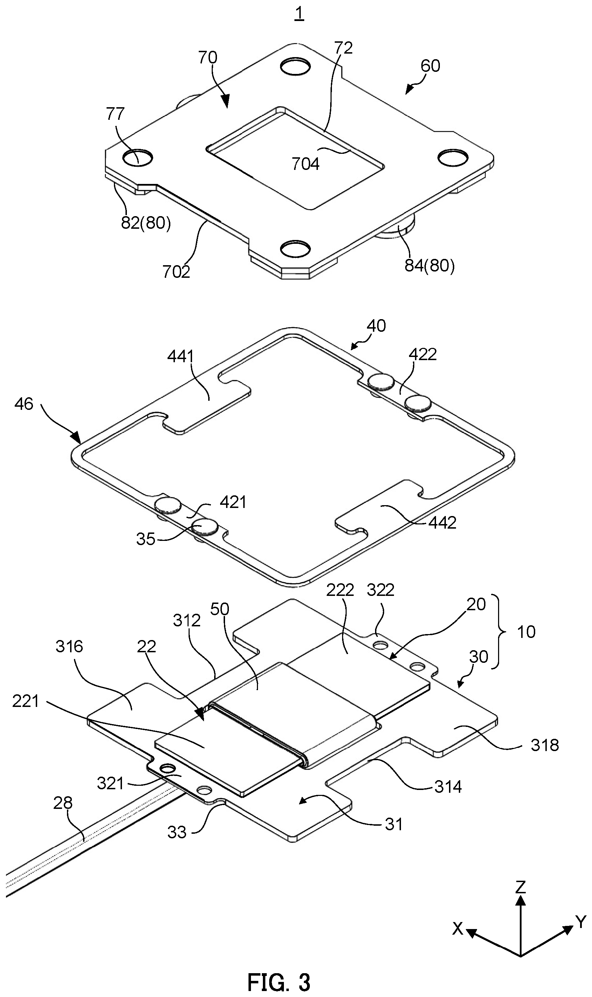

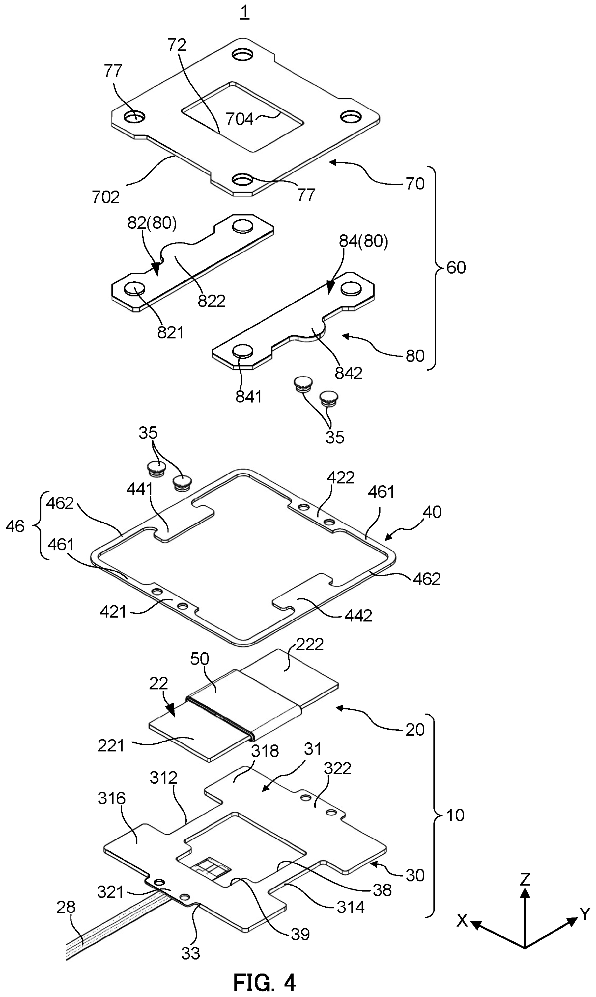

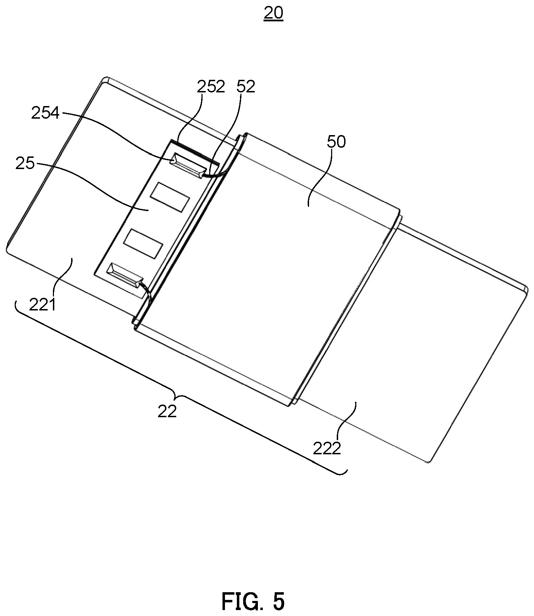

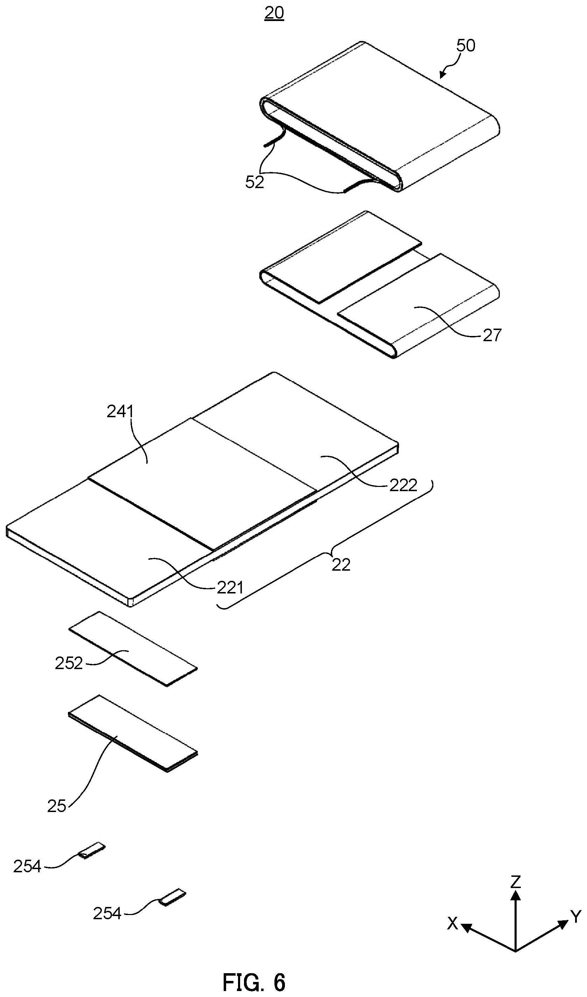

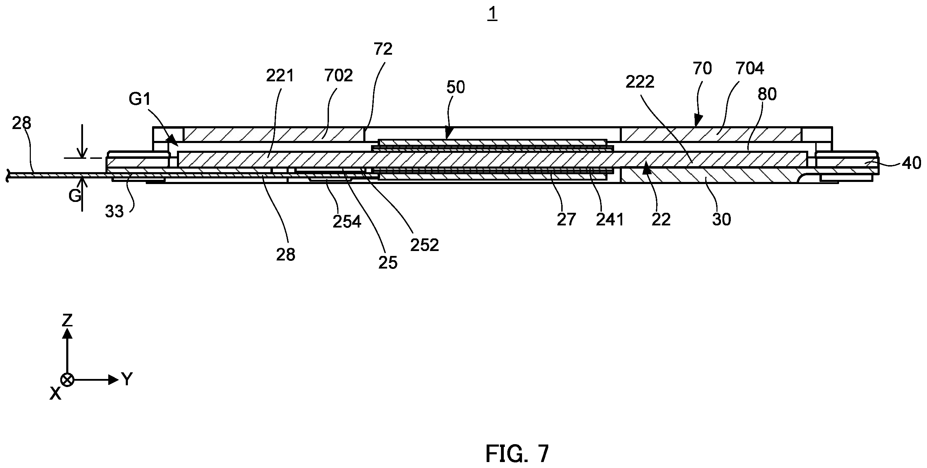

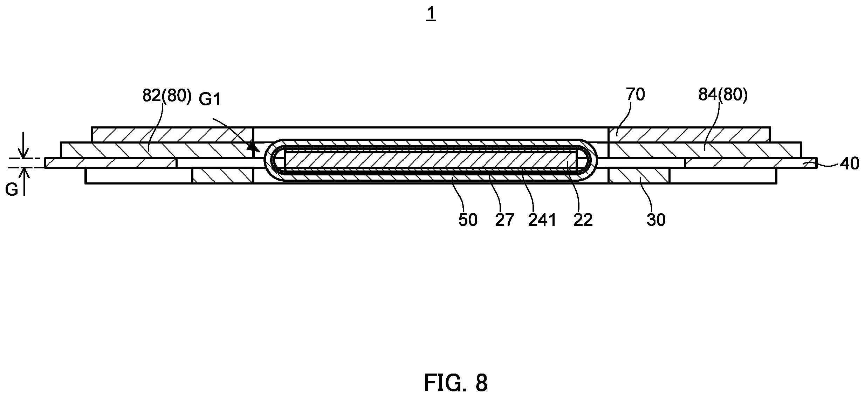

FIG. 1 is an external perspective view of a vibration actuator according to Embodiment 1 of the present invention, and FIG. 2 is a bottom view of the vibration actuator. FIG. 3 is an exploded view showing a configuration of a main part of the vibration actuator. FIG. 4 is an exploded perspective view of the vibration actuator. FIG. 5 is a perspective view of a core body of the vibration actuator as viewed from below. FIG. 6 is an exploded perspective view of the core body. FIG. 7 is a cross-sectional view taken along line A-A in FIG. 1, and FIG. 8 is a cross-sectional view taken along line B-B in FIG. 1.

Vibration actuator 1 according to the present embodiment includes fixed portion 10, elastic support portion 40, and movable portion 60.

### <Fixed Portion 10>

Fixed portion 10 includes base portion 30 and magnetic force generation section 20, which is an electromagnet.

### <Base portion 30>

Base portion 30 is a member for supporting vibration actuator 1 as a whole and for attaching vibration actuator 1 to a housing (not shown) of a vibration presentation device. As illustrated in FIGS. 1 to 4, 7, and 8, base portion 30 movably supports movable portion 60 in the thickness direction (Z direction) of vibration actuator 1 via elastic support portion 40.

Base portion 30 is formed of a non-magnetic material (sheet metal) such as austenitic SUS. Base portion 30 is, for example, a flat-thin plate having a predetermined thickness in the Z direction and is disposed along the XY plane, thereby enabling a reduction in the overall thickness of vibration actuator 1.

Base portion 30 is disposed so as to interpose elastic support portion 40 together with magnetic body 60 in the thickness direction. Note that on base portion 30, elastic support portion 40 and magnetic force generation section 20 (specifically, core 22 of magnetic force generation section 20) are disposed in the same layer.

Base portion 30 includes base main body 31 having a rectangular shape, and base opening portion 38 is provided in the central portion of base main body 31. A part of the coil of magnetic force generation section 20 fixed to base portion 30 is disposed in base opening portion 38. This allows part of the height of magnetic force generation section 20 to be accommodated within the plate thickness of base portion 30, thereby enabling a reduction in the overall thickness of vibration actuator 1.

In addition, opening portion for wiring (hereinafter, referred to as wiring opening portion) 39 is formed in base main body 31 adjacent to base opening portion 38. When magnetic force generation section 20 is fixed to base portion 30, substrate portion 25 disposed on magnetic force generation section 20 is placed in wiring opening portion 39. This allows part of the height of magnetic force generation section 20 to be accommodated by the plate thickness of base portion 30. Furthermore, recessed portion 33 is formed on the back side of base main body 31, recessed on the back side and continuous with wiring opening portion 39. Extension portion 28, which is a substrate connected to substrate portion 25 and led out to the exterior of base main body 31, is disposed in recessed portion 33. This prevents vibration actuator 1 itself from increasing in thickness due to the thickness of extension portion 28.

In addition, cutout portions 312 and 314 that each have a recessed shape and open outward (toward the outer side in the X direction) are provided on a pair of parallel side portions (side portions extending along the Y direction) of base main body 31. Movable-portion-side connecting portions (a pair of first connecting portions) 441 and 442 are disposed within cutout portions 312 and 314 so as to be displaceable in the Z direction. Cutout portions 312 and 314 allow movable-portion-side connecting portions 441 and 442 to be displaced even when movable-portion-side connecting portions 441 and 442 are disposed in the layer of base portion 30. As a result, the corner portions of base main body 31 each have a shape including projecting portions 316 and 318 that protrude in the X direction. In addition, base portion 30 is provided with base connecting portions 321 and 322 on the other pair of parallel side portions (side portions extending along the X direction) adjacent to the pair of parallel side portions.

Base connecting portions (protruding connecting portions) 321 and 322 are located outward of both core end portions 221 and 222 (both end portions) to which magnetic force generation section 20 is fixed, and protrude outward (here, in the Y direction, which is the direction in which magnetic force generation section 20 extends). Base connecting portions 321 and 322 are provided so as to protrude from the outer periphery of base main body 31. Base connecting portions 321 and 322 are formed to be thinner than the thickness of base main body 31, and the back side of base connecting portion 321 functions as a counterbore for fastening member 35 such as a rivet. In addition, counterbore portion 34 having a recessed shape is formed for fastening member 35 on the back side of base connecting portion 322. Note that base main body 31 is formed in a square frame shape in plan view by the pair of adjacent parallel side portions and the other pair of parallel side portions, thereby ensuring freedom in the orientation when attaching to the housing.

### <Magnetic force generation section (Electromagnet) 20>

As illustrated in FIGS. 3 to 6, magnetic force generation section 20 includes coil 50, core 22 which has a plate shape and around which coil 50 is mounted, and substrate portion 25 connected to coil 50.

Magnetic force generation section 20 is an electromagnet that excites core 22 by energizing coil 50 to generate a magnetic force, and is fixed to base portion 30.

Coil 50 is disposed around the outer periphery of the central portion of core 22 having a flat rectangular plate shape, via insulating film portion 27 so as to surround the central portion. Coil 50 is disposed so as not to directly contact core 22 by means of insulating film portion 27. Note that insulating film portion 27 is fixed to core 22 via adhesive 241 such as a thermosetting resin.

Core (magnetic core) 22 is a rectangular plate-shaped magnetic body and is formed in a strip shape including core end portions 221 and 222 that protrude from coil 50 disposed in the central portion in the axial direction of coil 50. When coil 50 is energized, core end portions 221 and 222 of core 22 are excited to generate a magnetic force. Furthermore, in the present embodiment, since core 22 is a rectangular plate, high dimensional accuracy can be maintained and processing such as cutting is facilitated during manufacturing.

Core 22 is preferably formed of a soft magnetic material such as silicon steel sheet, permalloy, or ferrite. Core 22 may also be made of electromagnetic stainless steel, sintered material, metal injection molding (MIM) material, laminated steel sheet, electrogalvanized steel sheet (SECC), or the like.

Core 22 is fixed to base main body 31 with coil 50 positioned in base opening portion 38 with respect to base main body 31.

Specifically, the lower surfaces (back surfaces) of core end portions 221 and 222 are placed on base main body 31, and the front surfaces (all or part of the surfaces exposed on the upper side) of core end portions 221 and 222 face movable core 70 of movable portion 60.

Core 22 is excited by energization of coil 50, and generates a magnetic force (magnetic attraction force) between the upper surfaces of core end portions 221 and 222 and movable core 70 positioned in the direction perpendicular to the upper surfaces (normal direction). Note that the normal direction is also referred to as the opposing direction, and in other words, corresponds to the vertical direction (Z direction).

Substrate portion 25 is connected to coil 50 and supplies power to coil 50. Substrate portion 25 is attached to core 22 via an adhesive portion such as an adhesive or double-sided tape 252. In addition, substrate portion 25 is disposed at a position avoiding coil 50 and the upper surface serving as the magnetic pole face relative to base main body 31, and is disposed on the back surface of core 22. Furthermore, substrate portion 25 is formed in a shape that is hidden behind core 22 itself in plan view. Substrate portion 25 has a wiring portion connected to extension portion 28, and electrically connects coil 50 and an external device via the wiring portion.

In substrate portion 25, the wiring portion is provided in a state in which core 22 and coil 50 are insulated, and includes a land portion for coil wiring connected to coil wire 52 at the end of coil 50 via fillet 254, and a land portion for external connection connected to an external device. The land portion for external connection is disposed alongside the land portion for coil wiring and is connected to extension portion 28, which is a led-out substrate disposed on the lower surface of base portion 30.

Substrate portion 25 is, for example, a flexible substrate and may be composed of multiple layers. For example, the insulating layer is made of a flexible material having insulating properties such as polyimide, and the insulated wiring portion is provided with the land portion for coil wiring, the land portion for external connection, and the like.

### <Movable portion 60>

Movable portion 60 is movable relative to fixed portion 10 in the vertical direction (plate thickness direction). Movable portion 60 includes movable core 70 and weight portion 80.

### <Movable Core (Plate-Shaped Magnetic Member) 70>

Movable core 70 has a function of receiving a magnetic force (magnetic attraction force) from fixed portion 10 (magnetic force generation section 20) and an elastic force from elastic support portion 40, and performing vibration motion to generate vibration.

When vibration actuator 1 is applied to a vibration presentation device, movable core 70 is disposed in contact with or connected to a vibration presenting section (typically an operation panel such as a touch panel or touch pad), and is capable of outputting its own vibration to the vibration presenting section. This enables movable core 70 to provide haptic feedback to an operator who has operated the vibration presenting section.

Movable core 70 is made of a magnetic material. Examples of the magnetic material include electrogalvanized steel sheet (SECC), electromagnetic stainless steel, sintered material, metal injection molding (MIM) material, and laminated steel sheet.

Movable core 70 is a frame-shaped member including an opening (opening portion 72) in the region of coil 50, and a part of coil 50 is disposed in opening portion 72.

Movable core 70 has opposing surfaces 702 and 704 that face core end portions 221 and 222 of core 22 of magnetic force generation section 20.

Opposing surfaces 702 and 704 are provided on the lower surface of movable core 70, and are positioned apart from the upper surfaces of core end portions 221 and 222 by the length of gap G in the normal direction (direction perpendicular to the axial direction of coil 50).

Opposing surfaces 702 and 704 are attracted to core end portions 221 and 222 by the magnetic attraction force generated between opposing surfaces 702 and 704 and core end portions 221 and 222 of core 22 due to energization of coil 50. That is, movable core 70 approaches core 22 in the normal direction (Z direction) within gap G.

Opposing surfaces 702 and 704 are formed in movable core 70 at symmetrical positions spaced apart from the center of movable core 70 in the Y direction with opening portion 72 at the center of movable core 70 interposed therebetween, and are formed at the central portion in the X direction.

Since opposing surfaces 702 and 704 entirely face core end portions 221 and 222, magnetic flux can flow efficiently between opposing surfaces 702 and 704 and core end portions 221 and 222.

Movable core 70 fixes weight portion 80 via weight fixing portion 77 at a position on the lower surface where weight portion 80 does not overlap with magnetic force generation section 20 including coil 50 in the vertical direction.

In movable core 70, since a part of coil 50 is disposed in opening portion 72, there is no need to support movable core 70 at a high position where coil 50 does not interfere, and movable portion 60 including movable core 70 can be disposed in close proximity to core 22 around which coil 50 is wound. In addition, movable core 70 is flat plate-shaped and is disposed along the XY plane, thereby enabling a reduction in the overall thickness of vibration actuator 1.

Note that movable core 70 can be made thicker and/or formed of a material with a higher specific gravity, thereby increasing the movable weight and achieving higher output vibration.

### <Weight Portion 80>

Weight portion 80 illustrated in FIGS. 4, 7, and 8 has a function of increasing the weight of movable portion 60 to promote vibration.

In vibration actuator 1, weight portion 80 is fixed to movable core 70 between elastic support portion 40 and magnetic force generation section 20, and between base portion 30 and movable core 70, so as not to impede movement of movable portion 60 in the thickness direction (Z direction) due to elastic deformation of elastic support portion 40.

Weight portion 80 is a plate-shaped body and includes a plurality of weight pieces 82 and 84. Weight pieces 82 and 84 are, for example, members formed in the same shape, thereby reducing manufacturing costs.

In plan view, weight pieces 82 and 84 are disposed inside frame-shaped elastic support portion 40 and on both sides of magnetic force generation section 20 so as to extend along the Y direction so as not to interfere with the vertical movement of movable portion 60 and elastic support portion 40. Weight pieces 82 and 84 have a shape corresponding to the dead space where movable portion 60 does not interfere when moving, between elastic support portion 40 and magnetic force generation section 20 (core 22 and coil 50), and are disposed in that space.

That is, weight pieces 82 and 84 are disposed between base portion 30 and movable core 70, and at a position avoiding magnetic force generation section 20 on the inner side of frame-shaped main body 46 of elastic support portion 40, and are connected to the lower surface of movable core 70. Weight pieces 82 and 84 are here elongated plate-shaped bodies extending in the Y direction, and each have a shape corresponding to one opposing side portion of the frame-shaped portion of movable core 70. Weight pieces 82 and 84 are fixed to weight fixing portion 77 of movable core 70 via core-side connecting sites 821 and 841 provided at both longitudinal end portions with spring-side connecting sites 822 and 842 interposed therebetween.

Weight pieces 82 and 84 are fixed at their respective central portions to movable-portion-side connecting portions 441 and 442 of elastic support portion 40, and are movable upward and downward inside elastic support portion 40 together with movable-portion-side connecting portions 441 and 442 as movable-portion-side connecting portions 441 and 442 are displaced.

That is, weight pieces 82 and 84 are disposed in a layer between the layer of elastic support portion 40 and the layer of movable core 70, and connect elastic support portion 40 and movable core 70 in the Z direction, that is, in the vertical direction. In this manner, the plurality of weight pieces 82 and 84 are respectively fixed on the pair of movable-portion-side connecting portions 441 and 442, and movable core 70 is laid across and connected to the upper surfaces of weight pieces 82 and 84.

In addition, the weight of weight pieces 82 and 84 can be set arbitrarily. For example, within the XY region between elastic support portion 40 and magnetic force generation section 20, various adjustments can be made, such as adjusting the length of weight pieces 82 and 84 in the Y direction, adjusting the length in the Z direction, or adjusting the material. In particular, when increasing the weight of the movable portion, the vibration output can be increased by achieving an appropriate weight by increasing the thickness of weight pieces 82 and 84, that is, the length in the Z direction, or by using a material with a higher specific gravity. Furthermore, the weight of movable portion 60 is adjusted using weight portion 80, and the natural frequency can be set by this adjustment.

In the present embodiment, weight pieces 82 and 84 and movable core 70, which are included in movable portion 60, are connected to elastic support portion 40 via weight portion 80. Weight pieces 82 and 84 and movable core 70 are fixed to base portion 30 via elastic support portion 40 at base connecting portions 321 and 322, adjacent to magnetic force generation section 20, in a state in which the thickness (length in the Z direction) of coil 50 is accommodated by opening portion 72. This makes it possible to achieve a low profile of vibration actuator 1 itself while adjusting vibration actuator 1 to vibrate at high output.

### <Elastic Support Portion (Elastic Body) 40>

Elastic support portion 40 has an elastically deformable function of being connected to fixed portion 10 and movable portion 60. Elastic support portion 40 elastically supports movable portion 60, which moves in the vertical direction upon receiving a magnetic force from fixed portion 10. Elastic support portion 40 is a frame-shaped body having a shape surrounding movable portion 60.

Elastic support portion 40 is a frame-shaped leaf spring having a predetermined thickness (length in the Z direction), and supports movable portion 60 relative to base portion 30 so as to be movable in the vertical direction (Z direction).

Elastic support portion 40 is a frame-shaped body disposed so as to surround base portion 30, and includes frame-shaped main body 46 disposed on the outer side of base portion 30 and deformable in the Z direction. Elastic support portion 40 is interposed in layers between base portion 30 and movable portion 60 in the thickness direction (Z direction).

Elastic support portion 40 connects movable portion 60 having a plate shape (specifically, weight pieces 82 and 84) and base portion 30 having a plate shape in a state being spaced apart by the thickness of elastic support portion 40, that is, in a state in which gap G (see FIGS. 7 and 8) is provided. Elastic support portion 40 includes a pair of mutually parallel side portions (the other pair of opposite sides) 461 and another pair of mutually opposing side portions (one pair of opposite sides) 462 adjacent to the pair of side portions 461. The pair of side portions 461 and the other pair of side portions 462 have the same length, and frame-shaped main body 46 is a square frame body.

In elastic support portion 40, fixed-portion-side connecting portions (a pair of second connecting portions) 421 and 422 are provided at the respective central portions of the pair of side portions 461 of frame-shaped main body 46. Elastic support portion 40 is connected to base portion 30 by being fastened to base connecting portions 321 and 322 of base main body 31 at fixed-portion-side connecting portions 421 and 422 via fastening members 35 such as rivets. Note that fixed-portion-side connecting portions 421 and 422 and base connecting portions 321 and 322 may be joined by crimping, welding, or the like, instead of fastening by fastening member 35.

Fixed-portion-side connecting portions 421 and 422 are fixed on base connecting portions 321 and 322 protruding outward from base main body 31, thereby partially connecting frame-shaped main body 46 to base main body 31 and disposing frame-shaped main body 46 so as to surround base main body 31.

In frame-shaped main body 46, from fixed-portion-side connecting portions 421 and 422 on base connecting portions 321 and 322, the pair of side portions 461 protrude along one side portion (side portion extending along the X direction), and the other pair of side portions 462 are connected so as to bend and extend along the Y direction. Side portions 461 and 462 are disposed on the outer side of base main body 31 so as to surround projecting portions 316 and 318.

In addition, movable-portion-side connecting portions 441 and 442 each having a flat plate shape are provided so as to protrude inward from the central portions of the other pair of side portions 462. Spring-side connection sites 822 and 842 of weight pieces 82 and 84 are placed on the upper surfaces of movable-portion-side connecting portions 441 and 442 and fixed thereto.

Movable-portion-side connecting portions 441 and 442 and spring-side connection sites 822 and 842 may be fixed using fastening members such as screws or bolts, or an adhesive, or may be joined and fixed via a recess and a protrusion of mutually fittable shapes provided on both.

Elastic support portion 40 is connected to movable portion 60 at the pair of movable-portion-side connecting portions 441 and 442 protruding inward from the pair of side portions (opposite sides) 462 of rectangular frame-shaped main body 46, so as to suspend movable portion 60. Meanwhile, elastic support portion 40 is connected to fixed portion 10 at the other side portions (opposite sides) 461 such that the pair of movable-portion-side connecting portions 441 and 442 are freely deformable in the normal direction.

In this manner, elastic support portion 40 is disposed so as to be in the same layer as core 22 on base main body 31, and is disposed laterally of coil 50. In addition, weight pieces 82 and 84 are disposed together with elastic support portion 40 laterally of core 22 and coil 50, that is, on the XY plane passing through the layer of core 22 and coil 50. Elastic support portion 40 is disposed in the same layer as the layer of coil 50 together with weight pieces 82 and 84. This achieves a reduction in the overall thickness of vibration actuator 1.

The thickness of elastic support portion 40 constitutes gap G, which is the movable range of movable portion 60. Weight pieces 82 and 84 form gap G1 that separates movable core 70 and coil 50 so that, when elastic support portion 40 deforms and is displaced within gap G, magnetic force generation section 20 (specifically, core 22) does not impede the accompanying displacement of movable portion 60.

In addition, elastic support portion 40 is a square frame-shaped body, connected to fixed portion 10 via fixed-portion-side connecting portions 421 and 422 at a pair of side portions 461, and connected to movable portion 60 via movable-portion-side connecting portions 441 and 442 at the other pair of side portions 462.

As a result, elastic support portion 40 supports movable portion 60 relative to base portion 30 in a well-balanced and symmetrical manner about the center of movable portion 60 in the normal direction and in directions perpendicular to the normal direction (X direction, Y direction). In addition, since elastic support portion 40 is a square frame-shaped body, stress can be distributed during elastic deformation, and movable portion 60 can move in the vibration direction (Z direction) without tilting relative to base portion 30. This improves the reliability and stability of the vibration state.

Note that since elastic support portion 40 is a rectangular frame body (here, thin plate frame-shaped body), the number of parts can be reduced and the overall thickness can be reduced. Furthermore, since elastic support portion 40 can be manufactured without bending of parts or the like, high dimensional accuracy is achieved.

In addition, as described later, elastic support portion 40 can determine the displacement amount and natural frequency of movable portion 60 by setting spring constant Kₛₚ, and generates mechanical haptic sensation by displacement occurring when movable portion 60 is driven, that is, when coil 50 is energized.

This ensures the reliability of movement of vibration actuator 1 itself. Note that excessive movement of movable portion 60 toward base portion 30 is constrained by opposing surfaces 702 and 704 of movable core 70 coming into contact with the surfaces of core end portions 221 and 222.

### <Magnetic Circuit of Vibration Actuator 1>

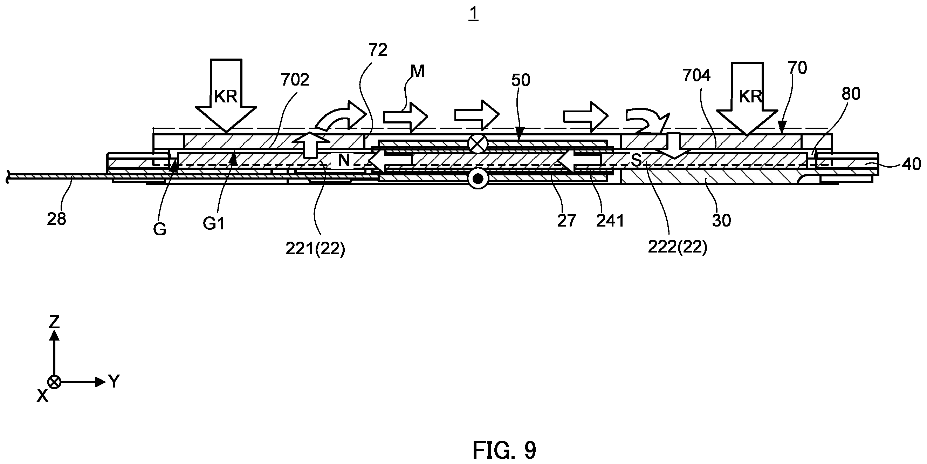

FIG. 9 is a diagram for describing the magnetic circuit of vibration actuator 1. Note that FIG. 9 is a cross-sectional view of vibration actuator 1 illustrated in FIG. 7.

As illustrated in FIG. 9, when a current is passed through coil 50 of magnetic force generation section 20, core 22 is excited to generate a magnetic field, and core end portions 221 and 222 of core 22 (specifically, core end portions 221 and 222) become magnetic poles. For example, assuming that one core end portion 221 becomes an N pole and the other core end portion 222 becomes an S pole in core 22, a magnetic circuit indicated by magnetic flux flow M is formed between core 22 and opposing surfaces 702 and 704 of movable core 70.

Magnetic flux flow M in this magnetic circuit flows from one core end portion 221 to opposing surface 702 of movable core 70 facing thereto, passes through movable core 70, and reaches opposing surface 704 from opposing surface 702. Magnetic flux M then flows from opposing surface 704 to the other core end portion 222 of core 22, passes through core 22, and is emitted again from one core end portion 221.

As a result, core end portions 221 and 222 of core 22 generate magnetic attraction force KR by the principle of electromagnetic solenoid. That is, magnetic attraction force KR is generated in a direction orthogonal to the winding axis of coil 50 in the electromagnet, and both opposing surfaces 702 and 704 of movable core 70 are attracted to both core end portions 221 and 222.

Since base portion 30 is fixed to the housing, movable core 70 moves toward magnetic force generation section 20 (in the negative Z direction).

Next, when energization of coil 50 is released, the magnetic field disappears, magnetic attraction force KR acting on movable portion 60 is eliminated, and the biasing force of elastic support portion 40, deformed toward base portion 30, is released. That is, a reaction force of the spring serving as elastic support portion 40 (force in the negative KR direction) is generated.

By the reaction force (negative KR) of elastic support portion 40, movable portion 60 moves so as to return to its original position (the position of movable portion 60 indicated by the dashed line in FIG. 9, or the position in the non-driven stationary state, which is the reference position as illustrated in FIG. 7) (moves in the positive Z direction, which is opposite to the attraction direction of magnetic attraction force KR). At this time, movable portion 60 is moved by the reaction force (negative KR) to a position displaced in a direction away from base portion 30 beyond the stationary position in the stationary state, thereby generating strong vibration.

This vibration repeats while attenuating as the biasing force decreases, resulting in free oscillation. Alternatively, vibration may be generated by alternately repeating energization and de-energization of coil 50 to cause movable portion 60 to reciprocate in the negative Z direction. In this manner, in magnetic force generation section 20, movable portion 60 is supported in a suspended manner from base portion 30 by elastic support portion 40. When energized, movable portion 60 functions as an electromagnet, is mechanically displaced by the magnetic attraction force generated between opposing surfaces 702 and 704 of movable core 70, which is a magnetic body, and subsequently undergoes free oscillation.

In this manner, magnetic force generation section 20 moves movable portion 60 toward base portion 30 by the magnetic attraction force generated between core end portions 221 and 222 of core 22 and opposing surfaces 702 and 704 (movable core 70, which is a magnetic body) upon energization of coil 50. This movement of movable portion 60 generates vibration of movable portion 60 by the elastic force (biasing force) generated in elastic support portion 40, thereby imparting a haptic sensation to the user.

In vibration actuator 1, in magnetic force generation section 20, coil 50 having a flat plate-shape is wound around core 22 having a thin plate-shape. Furthermore, core 22 is movably supported in the Z direction relative to base portion 30 by elastic support portion 40 in a state in which coil 50 is inserted through base opening portion 38 of base portion 30 having a thin plate shape. Moreover, a part of coil 50 is also disposed within opening portion 72 of movable core 70, thereby achieving a further reduction in thickness (lower profile). In the present embodiment, since a part of coil 50 is disposed within opening portion 72 even in the stationary state, a further reduction in thickness is achieved.

Magnetic force generation section 20 does not include a magnet, is configured in a thin plate shape to vibrate, and achieves a low profile, thereby realizing a space-saving arrangement. That is, the configuration of vibration actuator 1 having magnetic force generation section 20 has a further reduced thickness compared to configurations in which members that generate magnetism and drive the movable portion in the Z direction are stacked in the Z direction, such as configurations in which a coil and a magnet are disposed facing each other in the Z direction. Vibration actuator 1 can be thinned and miniaturized, and can impart a suitable haptic sensation corresponding to the pressing operation of the user on the vibration presentation section.

### <Driving Principle of Vibration Actuator 1 (Magnetic force generation section 20)>

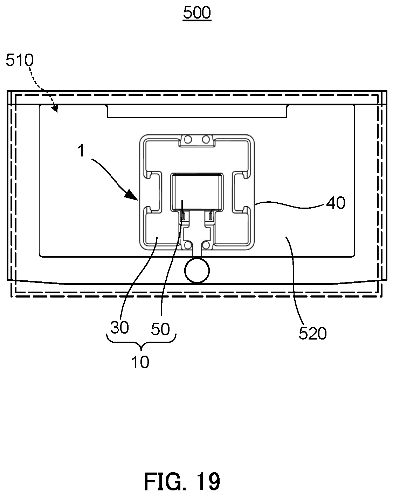

Hereinafter, the driving principle of vibration actuator 1 will be briefly described. Vibration actuator 1 can also be driven by using a pulse to generate a resonance phenomenon by using the following motion equation and circuit equation. Note that, as the operation, for example, vibration actuator 1 need not be resonance-driven and may express an operational feel as a track pad as vibration presentation device 500 illustrated in FIG. 19, for example, and may be driven by inputting a current pulse (singular or plural) via a control section (not shown).

Note that movable portion 60 in vibration actuator 1 performs reciprocating motion based on Equations 1 and 2.
[1] $m \frac{{d}^{2} x \left(t\right)}{{dt}^{2}} = {K}_{f} i \left(t\right) - {K}_{sp} x \left(t\right) - D \frac{dx \left(t\right)}{dt}$
   m: Mass [kg]
   x(t): Displacement [m]
   K_{f}: Thrust constant [N/A]
   i(t): Current [A]
   Kₛₚ: Spring constant [N/m]
   D: Damping coefficient [N/(m/s)]
[2] $e \left(t\right) = Ri \left(t\right) + L \frac{di \left(t\right)}{dt} + {K}_{e} \frac{dx \left(t\right)}{dt}$
   e(t): Voltage [V]
   R: Resistance [Ω]
   L: Inductance [H]
   Kₑ: Back EMF constant [V/(rad/s)]

That is, the mass m [Kg], the displacement x(t) [m], the thrust constant K_{f} [N/A], the current i(t) [A], the spring constant Kₛₚ [N/m], the damping coefficient D [N/(m/s)], and the like in magnetic force generation section 20 can be appropriately changed within a range in which Equation 1 is satisfied. In addition, the voltage e(t) [V], the resistance R [Ω], the inductance L [H], and the back EMF constant Kₑ [V/(rad/s)] can be appropriately changed within a range in which Equation 2 is satisfied.

As described above, the vibration in vibration actuator 1 is determined by the mass m of movable portion 60 and the spring constant Kₛₚ of the metal spring (leaf spring in the present embodiment) as elastic support portion 40. In addition, the vibration generated by magnetic force generation section 20 can be set by the input voltage (pulse) and, when provided, by the degree of damping of the vibration damping part.

### <Drive Circuit for Vibration Actuator 1>

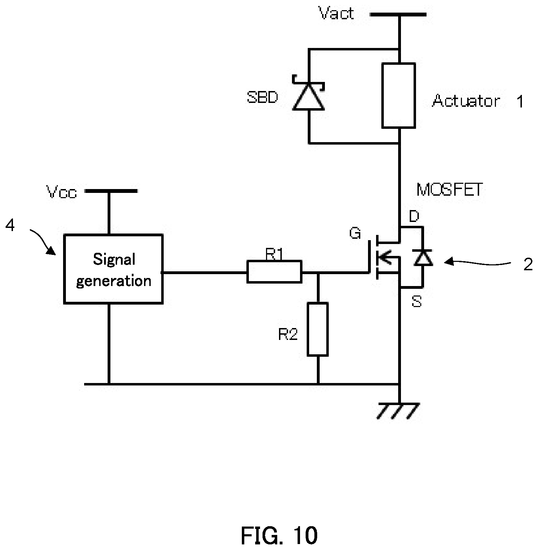

FIG. 10 illustrates a circuit configuration of a control section of the vibration actuator according to Embodiment 1.

The drive circuit illustrated in FIG. 10 is included in the control section of vibration actuator 1. The drive circuit includes switching element 2 as a current pulse supply section configured by a Metal-Oxide-Semiconductor Field-Effect Transistor (MOSFET), signal generation section 4 as a voltage pulse application section, resistors R1 and R2, and Schottky Barrier Diodes (SBD). The drive circuit is an example of a specific configuration of an actuator driver.

Signal generation section 4 connected to the power supply voltage Vcc is connected to a gate of switching element 2. Switching element 2 is a discharge switching switch. Switching element 2 is connected to vibration actuator 1 (indicated by [Actuator] in FIG. 10), particularly to signal generation section 4 of vibration actuator 1. A voltage is applied to vibration actuator 1 from power supply section Vact. Therefore, switching element 2 is turned on and off by the gate voltage control by signal generation section 4, and the current flows when switching element 2 is turned on, and coil 50 that functions as a part of the vibration generation section is energized in vibration actuator 1.

The control section may include a calculation processing device configured by a Central Processing Unit (CPU) or the like that controls the entire vibration presentation device on which vibration actuator 1 is mounted, a main memory device configured by, for example, Random Access Memory (RAM) that operates as a working area of the calculation processing device, and an auxiliary memory device configured by, for example, non-volatile memory such as a flash memory or a hard disk that stores an operation program of the calculation processing device. The configuration including the calculation processing device, the main memory device, and the auxiliary memory device is, for example, an example of a specific configuration of a microcomputer. The calculation processing device reads out various control programs and various data and the like associated with the programs (hereinafter, collectively referred to as "programs and the like") from the auxiliary memory device. The calculation processing device stores the read various data and the like in the main memory device, and executes the control program while using the data and the like to realize various functions of the vibration presentation device. For example, the data may include various pulse waveform data for expressing various patterns such as a plurality of different vibration damping periods and a plurality of different vibration intensities. The various control programs may include a program for loading the pulse waveform data for generating an actuator drive signal that generates vibration corresponding to the input information when information indicating the touch operation of the operator is input, and generates the actuator drive signal in accordance with the read pulse waveform data.

Furthermore, the auxiliary memory device may be a storage medium that is attachable to and detachable from the vibration presentation device. In addition, the control section may be configured to be communicable with the outside, and the programs and the like may be downloaded from the outside to the control section (main memory device or auxiliary memory device) via a communication network. The main memory device and the auxiliary memory device described above are examples of a non-transitory computerreadable storage medium.

Coil 50 is formed of a material having high conductivity, for example, copper. Core 22 is formed of a material having high magnetic permeability (ferromagnetic material, simply referred to as magnetic body), and is preferably formed of SECC, silicon steel sheet, SUS, or the like. Elastic support portion 40 is preferably non-magnetic, and SUS, phosphor bronze, a resin, rubber, or the like may be applied as a non-magnetic material constituting the elastic support portion and the elastic body. In addition, base portion 30 is preferably formed of a material having high magnetic permeability, for example, SECC, silicon steel sheet, or SUS (ferromagnetic SUS). Weight pieces 82 and 84 are formed of a high specific gravity material, such as phosphor bronze, SUS, tungsten, or the like.

### (Embodiment 2)

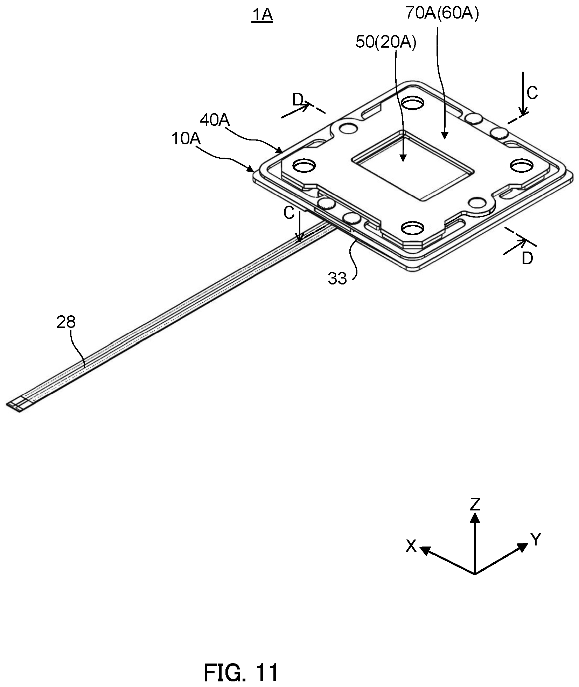

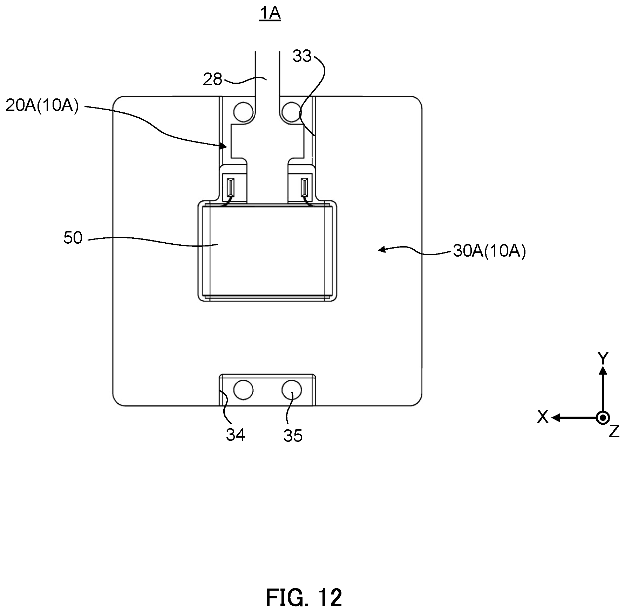

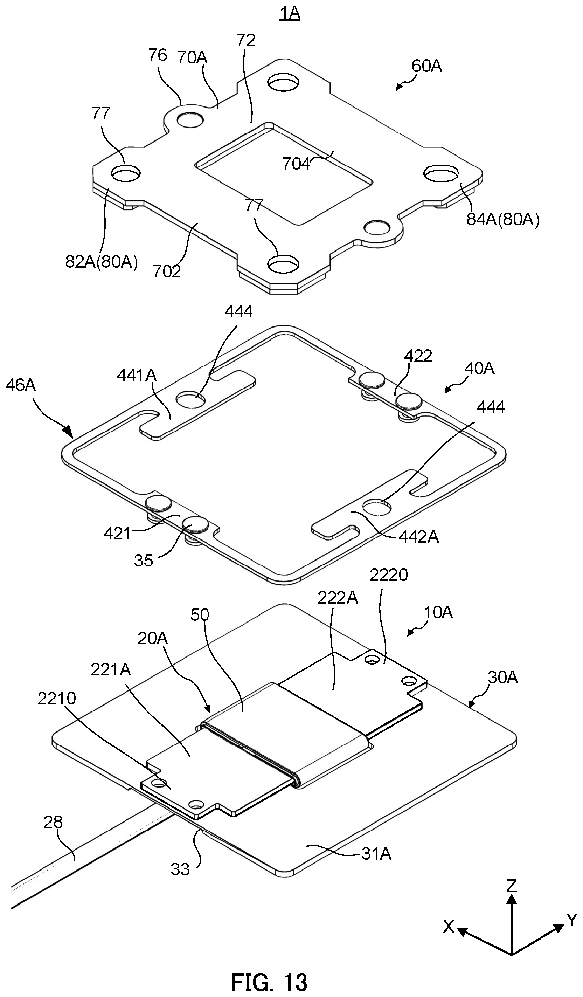

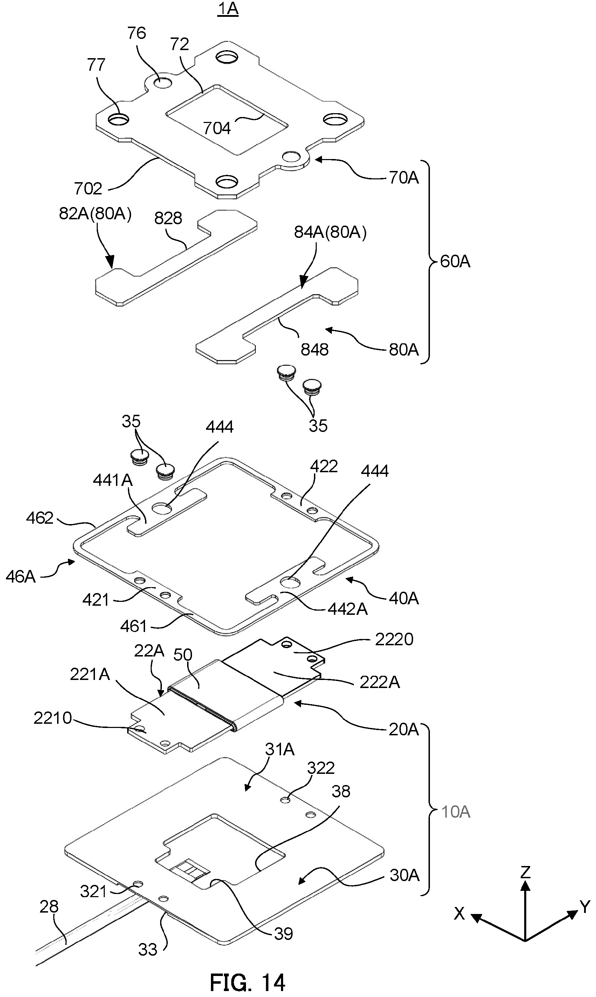

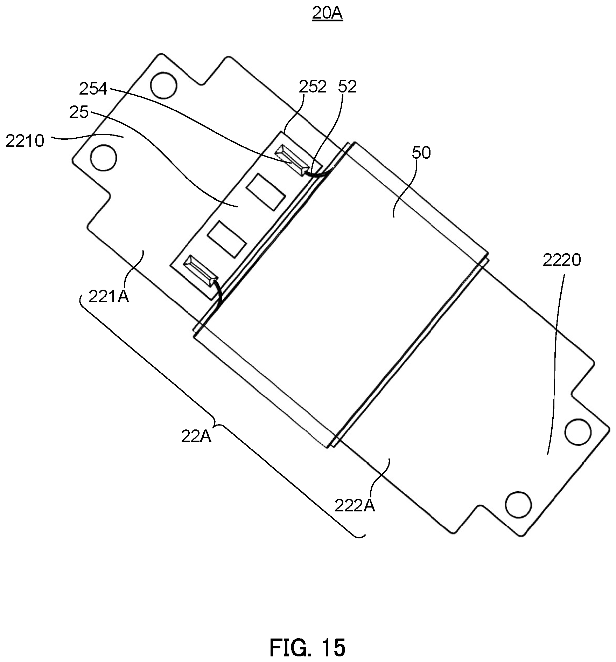

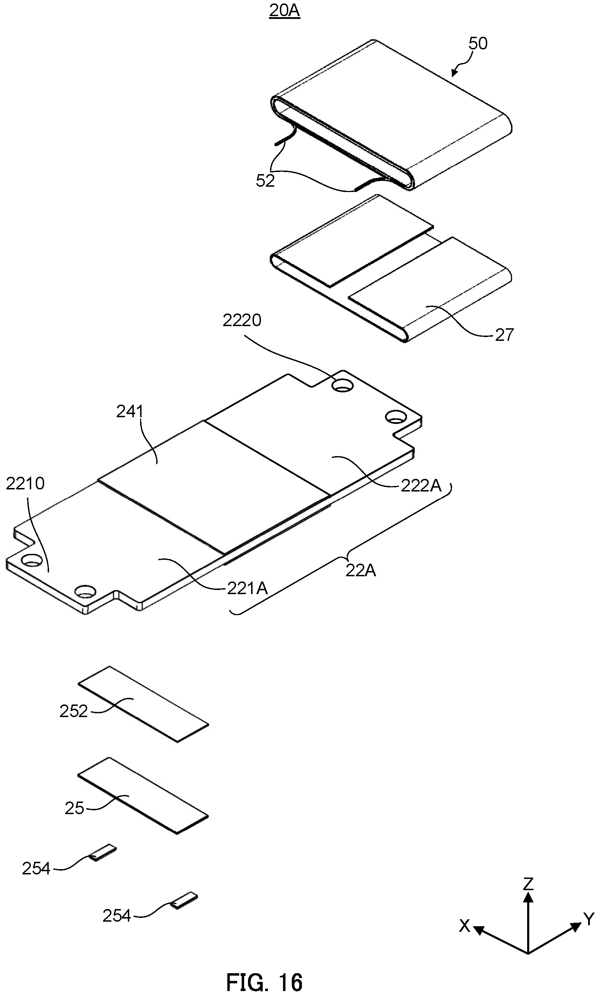

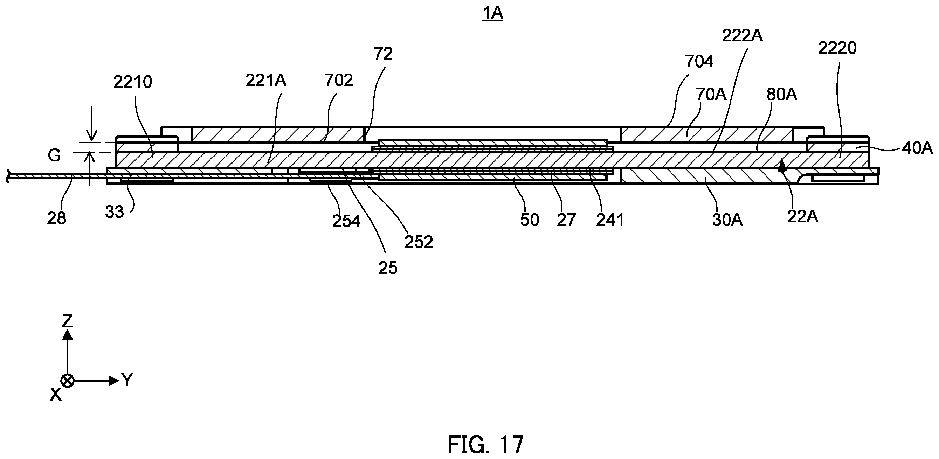

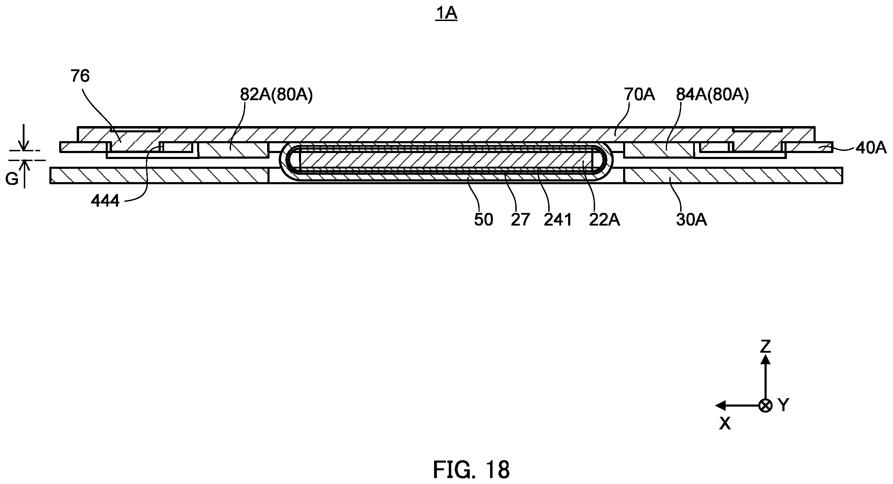

FIG. 11 is an external perspective view of a vibration actuator according to Embodiment 2 of the present invention, and FIG. 12 is a bottom view of the vibration actuator. FIG. 13 is an exploded perspective view showing a main configuration of the vibration actuator, and FIG. 14 is an exploded perspective view of the vibration actuator. FIG. 15 is a perspective view of a core body of the vibration actuator as viewed from below. FIG. 16 is an exploded perspective view of a core body. FIG. 17 is a cross-sectional view taken along line C-C in FIG. 11. FIG. 18 is a cross-sectional view taken along line D-D in FIG. 11.

Vibration actuator 1A has the same basic configuration as vibration actuator 1 corresponding to Embodiment 1 illustrated in FIG. 1, and the same components are designated by the same reference numerals, and the description thereof will not be repeated. In addition, components having different functions in the same configuration are designated by the same name and the same reference numeral A or a different reference numeral, and are described. Further, vibration actuator 1A is driven by the circuit of the same control section and the same drive principle using the above-described Equations 1 and 2 as vibration actuator 1.

For vibration actuator 1 according to Embodiment 1 described above, a configuration has been described in which elastic support portion 40 is attached to base portion 30 of fixed portion 10, and weight pieces 82 and 84 are provided on elastic support portion 40. However, as in vibration actuator 1A in FIGS. 11 to 18, elastic support portion 40A may be attached to core 22A of magnetic force generation section 20A in fixed portion 10A. In this case, elastic support portion 40A may be attached to movable core 70A of movable portion 60A, and weight pieces 82A and 84A may be attached to movable core 70A.

Vibration actuator 1A includes fixed portion 10A, elastic support portion 40A, and movable portion 60A.

In vibration actuator 1A, fixed portion 10A includes magnetic force generation section 20A and base portion 30A to which magnetic force generation section 20A is fixed, and movable portion 60A includes movable core 70A and weight pieces 82A and 84A.

### <Base portion 30A>

Base portion 30A is a member for supporting the entire vibration actuator 1A and attaching vibration actuator 1A to the housing (not shown) of the vibration presentation device, similarly to base portion 30.

Base portion 30A is a flat plate-shaped sheet metal, and is made of a non-magnetic material such as austenitic SUS, similarly to base portion 30. Base portion 30A forms a flat-shaped body, is disposed along the XY plane, and can achieve a thinner profile of the entire vibration actuator 1A.

Base portion 30A includes base main body 31A having a rectangular shape, and in the central portion, base opening portion 38 and wiring opening portion 39, which have the same functions as those of base portion 30, are provided. Base portion 30A is formed in a square shape, and a part of coil 50 of magnetic force generation section 20A fixed to base portion 30A is disposed in base opening portion 38. In addition, in wiring opening portion 39, substrate portion 25 disposed in magnetic force generation section 20A is disposed when magnetic force generation section 20A is fixed to base portion 30A.

Magnetic force generation section 20A is fixed to base portion 30A.

Base portion 30A may be fixed at, for example, the back surfaces of both core end portions 221A and 222A, which have planar shapes and protrude on both sides of coil 50 in magnetic force generation section 20A.

Base portion 30A is fastened by rivets as fastening members 35 together with elastic support portion 40A at fixing tab portions 2210 and 2220 at both ends of magnetic force generation section 20A.

As a result, core 22A of magnetic force generation section 20A is mounted on base portion 30A, and movable core 70A of movable portion 60A is joined to the upper surface of core 22A (fixing tab portions 2210 and 2220 of core 22A) so as to span across it. At this time, magnetic force generation section 20A is disposed inside elastic support portion 40A so as to span across base main body 31A at both sides of base opening portion 38.

In addition, recessed portion 33 is formed on the back surface (outer surface) of base portion 30A. Extension portion 28 is disposed in recessed portion 33, and the back surface part of base connecting portion 321 in recessed portion 33 functions as a counterbore when fastened by fastening member 35 such as riveting. Counterbore portion 34 having a recessed shape is formed on the back surface of base connecting portion 322.

### <Magnetic force generation section 20A>

As illustrated in FIGS. 13 to 16, magnetic force generation section 20A includes coil 50, core 22A which has a plate shape and around which coil 50 is wound, and substrate portion 25 that is connected to coil 50.

Magnetic force generation section 20A is different from magnetic force generation section 20 in that fixing tab portions 2210 and 2220 to which elastic support portion 40A is connected are provided. Thus, the same configuration as that of magnetic force generation section 20 will be denoted by the same reference numerals, and the description thereof will be omitted.

Magnetic force generation section 20A is an electromagnet that excites core 22A by energizing coil 50 wound around the central portion via insulating film portion 27 to generate a magnetic force.

Core 22A includes fixing tab portions 2210 and 2220 that are joined to elastic support portion 40A in the configuration of core 22A.

Fixing tab portions 2210 and 2220 are provided to protrude from core end portions 221A and 222A of core 22A in the longitudinal direction (coil axis direction) of core 22A, and have the same thickness as core end portions 221A and 222A. Accordingly, when magnetic force generation section 20A is fixed to base main body 31A of base portion 30A, elastic support portion 40A is disposed at a position overlapping the layer of core 22A on the outside of core end portions 221A and 222A of magnetic force generation section 20A. With this configuration, core 22A, by being fixed to base main body 31A, can position elastic support portion 40A disposed on the outside of core end portions 221A and 222A. Substrate portion 25 to which coil wire 52 is connected via fillet 254 is attached to the back surface of core 22A. Substrate portion 25 is connected to extension portion 28 on the lower surface when core 22A is fixed to base portion 30A.

### <Elastic Support Portion 40A>

Elastic support portion 40A is a leaf spring having a rectangular frame shape that is configured in the same manner as elastic support portion 40, and is connected to fixed portion 10A and movable portion 60A.

Elastic support portion 40A elastically supports movable portion 60A that moves in the vertical direction by receiving a magnetic force from fixed portion 10A.

Elastic support portion 40A may have, for example, an outer shape having the same dimensions as base main body 31A. Elastic support portion 40A is fixed on base main body 31A via fixing tab portions 2210 and 2220 of core 22A, and is fixed in a state of being raised from base main body 31A by the thickness of core 22A. As a result, elastic support portion 40A protrudes from fixing tab portions 2210 and 2220 on base main body 31A, and is deformable and displaceable in the Z direction and the -Z direction above the outer edge of base main body 31A.

In elastic support portion 40A, movable core 70A is attached to the upper surfaces of movable-portion-side connecting portions (pair of first connecting portions) 441A and 442A. In this manner, elastic support portion 40A is disposed on base main body 31A to surround magnetic force generation section 20A, and elastically supports movable portion 60A to be movable in the vertical direction relative to magnetic force generation section 20A.

Movable-portion-side connecting portions 441A and 442A and movable core 70A may be fixed by using fastening members such as screws or bolts, an adhesive, or the like, but may be joined and fixed to each other via recessed portions and protrusion portions that are provided on both and shaped to be capable of being fitted to each other. For example, movable core 70A is provided with protruding boss portions (protrusion portions) that protrudes toward the movable-portion-side connecting portions 441A and 442A at spring joining portions 76, and movable-portion-side connecting portions 441A and 442A are provided with joining holes 444 into which the boss portions are fitted. Joining hole 444 may be an elongated hole that internally fits the boss portion at a part thereof. Joining holes 444 function to position movable-portion-side connecting portions 441A and 442A relative to movable portion 60A by having the boss portions disposed therein, and fixes the pressfitted boss portions.

### <Movable Core (Magnetic Member) 70A>

Movable core 70A is different from movable core 70 in that movable core 70A includes spring joining portion 76.

Movable core 70A is disposed on elastic support portion 40A, and the layer of movable core 70A is stacked on the layer of elastic support portion 40A. Movable core 70A includes spring joining portions 76, and is joined to movable-portion-side connecting portions 441A and 442A of elastic support portion 40A at spring joining portions 76.

Movable core 70A is a rectangular plate-shaped frame body having opening portion 72 at a central portion, and an upper portion of coil 50 is disposed in opening portion 72.

Note that movable core 70A faces the surfaces of core end portions 221A and 222A of magnetic force generation section 20A entirely at opposing surfaces 702 and 704. Magnetic attraction force is generated between opposing surfaces 702 and 704 and core end portions 221A and 222A by energizing coil 50.

Movable core 70A moves in the negative Z direction by energizing coil 50 and moves in the positive Z direction by the biasing force of elastic support portion 40A.

Weight portion 80A (weight pieces 82A and 84A), which is disposed in the layer where elastic support portion 40A is attached, is attached to movable core 70A via weight fixing portion 77.

### <Weight Portion 80A (Weight Pieces 82A and 84A)>

Weight portion 80A (weight pieces 82A and 84A) is fixed to movable core 70A and has a function of increasing the weight of the movable portion in movable portion 60A to promote vibration.

Weight portion 80A is a plate-shaped body and includes a plurality of plate-shaped weight pieces 82A and 84A. Weight pieces 82A and 84A are, for example, members formed in the same shape, and thus the manufacturing cost is reduced.

Weight pieces 82A and 84A are disposed in a region between base portion 30A and movable core 70A, that is, in a layer between the layer of base portion 30A and the layer of movable core 70A, and coplanar with the layer in which elastic support portion 40A having a frame shape is disposed. In addition, weight pieces 82A and 84A are disposed inside elastic support portion 40A in a region that avoids magnetic force generation section 20A. Weight pieces 82A and 84A have shapes that allow them to be placed in such a region.

Weight pieces 82A and 84A are disposed inside frame-shaped main body 46A between a pair of side portions 462 and magnetic force generation section 20A, and have cutout portions 828 and 848. Further, in cutout portions 828 and 848, movable-portion-side connecting portions 441A and 442A are disposed. Weight pieces 82A and 84A are disposed in the same layer aligned with elastic support portion 40A in the XY direction, and are connected to movable core 70A on upper surfaces thereof.

As a result, when movable core 70A moves, weight pieces 82A and 84A follow this movement and move together with movable-portion-side connecting portions 441A and 442A. Weight pieces 82A and 84A are disposed in the layer where elastic support portion 40A and magnetic force generation section 20A are disposed, so as to fill the space of the dead space between elastic support portion 40A and magnetic force generation section 20A and so as to be vibratable. This allows for an increase in vibration output while achieving a reduction in the thickness of vibration actuator 1A.

In addition, weight pieces 82A and 84A are configured to have a thickness equal to or less than the thickness of core 22A (e.g., 0 mm < thickness of weight pieces 82A and 84A ≤ thickness of core 22A). Thus, even when movable portion 60A moves in a direction approaching fixed portion 10A, weight pieces 82A and 84A do not interfere with base main body 31A before core 22 interferes with movable core 70A (opposing surfaces 702 and 704).

### <Vibration Presentation Device 500>

FIG. 19 is a diagram illustrating an example of a vibration presentation device including the vibration actuator. Note that, in FIG. 19, a planar trackpad main body, on which an operator performs a pressing operation with a finger, is illustrated transparently. Furthermore, although a description is given using vibration actuator 1 in FIG. 19, vibration actuator 1A may be used instead of vibration actuator 1.

Vibration presentation device 500 is, for example, a track pad as a pointing device used instead of a mouse in a laptop computer or the like.

The track pad as vibration presentation device 500 is disposed in a rectangular opening portion provided in a housing of a laptop computer or the like. The track pad includes plate-shaped pad body 510 that is subjected to a touch operation by being traced with a finger and vibration actuator 1 disposed on a back side of pad body 510. Specifically, pad main body 510 is disposed in a recessed portion of a housing so as to face bottom portion 520 of the recessed portion, and vibration actuator 1 is disposed, on the back side of pad main body 510, between pad main body 510 and bottom portion 520 of the recessed portion. Base portion 30 is fixed to the back surface of pad main body 510, and movable portion 60 is mounted in a suspended state. Alternatively, a configuration may be adopted in which movable portion 60 and fixed portion 10 are connected between pad main body 510 and bottom portion 520 of the recessed portion on the back side of pad main body 510.

When pad main body 510 is subjected to a touch operation such as being traced or tapped with a finger, vibration actuator 1 imparts vibration serving as a haptic sensation. Specifically, in vibration actuator 1, coil 50 is energized in response to a touch operation of the user on pad main body 510, which is an operation surface, movable portion 60 is vibrated by coil 50 to present a haptic sensation to the user. For example, vibration actuator 1 is attached to the back side of the center portion of pad main body 510 using double-sided tape, screws or bolts as fastening members, an adhesive, welding, or the like.

Note that vibration actuators 1 and 1A according to the present embodiment are configured to include base portions 30 and 30A, elastic support portions 40 and 40A, and movable cores 70 and 70A each having a rectangular plate shape, and include weight portions 80 and 80A with shapes corresponding thereto; however, each of these components may be formed in a disk shape (with the elastic support portions being annular shapes).

The disclosure of Japanese Patent Application No. 2023-184891, filed on October 27, 2023, including the specification, drawings and abstract, is incorporated herein by reference in its entirety.

### Industrial Applicability

The vibration actuator and the vibration presentation device according to the present invention have an effect of ensuring the thinness of the entire device and stably vibrating with high output, and are useful, for example, as a vibration presentation device used as a vibration generator.

### Reference Signs List

1, 1A Vibration actuator
2 Switching element
4 Signal generation section
10, 10A Fixed portion
20, 20A Magnetic force generation section
22, 22A Core
25 Substrate portion
27 Insulating film portion
28 Extension portion
30, 30A Base portion
31, 31A Base main body
33 Recessed portion
34 Counterbore portion
35 Fastening member
38 Base opening portion
39 Wiring opening portion
40, 40A Elastic support portion
46, 46A Frame-shaped main body
50 Coil
52 Coil wire
60, 60A Movable portion
70, 70A Movable core
72 Opening portion
76 Spring joining portion
77 Weight fixing portion
80, 80A Weight portion (plate-shaped weight portion)
82, 82A, 84, 84A Weight piece (plate-shaped weight portion)
221, 221A, 222, 222A Core end portion (both end portions)
241 Adhesive
252 Double-sided tape
254 Fillet
312, 314 Cutout portion
316, 318 Projecting portion
321, 322 Base connecting portion (protruding connecting portion)
421, 422 Fixed-portion-side connecting portion (second connecting portion)
441, 441A, 442, 442A Movable-portion-side connecting portion (first connecting portion)
444 Joining hole
461 Side portion (other opposite side)
462 Side portion (one opposite side)
500 Vibration presentation device
510 Pad main body
520 Bottom portion
702, 704 Opposing surface
822, 842 Spring-side connecting site
2210, 2220 Fixing tab portion (protruding end portion)

## Claims

1. A vibration actuator, comprising:
a fixed portion including:
a magnetic force generation section in which a magnetic core having a plate shape is inserted through a coil and both end portions of the magnetic core protrude from the coil; and
a base portion to which the magnetic force generation section is fixed while the both end portions overlap with an upper surface of the base portion;
a movable portion including:
a magnetic member having a plate shape and facing the both end portions from above in a normal direction perpendicular to the upper surface; and
a weight portion disposed on a lower surface of the magnetic member at a position avoiding the magnetic force generation section; and
an elastic body that is a frame-shaped body including a first pair of opposite sides and a second pair of opposite sides surrounding the movable portion, is connected to the movable portion at a pair of first connecting portions of the first pair of opposite sides, and is connected to the fixed portion at a pair of second connecting portions of the second pair of opposite sides, wherein
the movable portion is displaced and vibrates so as to approach the fixed portion by a magnetic force generated by energization of the coil.

2. The vibration actuator according to claim 1, wherein
the base portion includes an opening portion in a central portion, and
the magnetic force generation section is fixed to the base portion, with a lower portion of the coil disposed in the opening portion.

3. The vibration actuator according to claim 1, wherein
the frame-shaped body of the elastic body is formed to surround the base portion, and the second pair of opposite sides of the frame-shaped body is fixed to protruding connecting portions at the pair of second connecting portions, the protruding connecting portions protruding from an outer periphery of the base portion.

4. The vibration actuator according to claim 3, wherein
the weight portion includes a plurality of weight pieces respectively fixed on the pair of first connecting portions, with the magnetic member laid across and connected to upper surfaces of the weight pieces.

5. The vibration actuator according to claim 3, wherein
the base portion is provided with a cutout portion in which the pair of first connecting portions are disposed to be movable in the normal direction.

6. The vibration actuator according to claim 1, wherein
the weight portion is a plate-shaped weight portion having a thickness equal to or less than a thickness of the magnetic core, and is disposed in the same layer as the elastic body.

7. The vibration actuator according to claim 6, wherein
the both end portions are each provided with a fixing tab portion, the fixing tab portion having a plate-shape, extending in an axial direction of the coil, and being disposed on the upper surface, and
the elastic body is fixed to a plurality of the fixing tab portions at the pair of second connecting portions, respectively, such that the frame-shaped body is spaced apart from the upper surface of the base portion.

8. The vibration actuator according to claim 1, wherein
the magnetic member includes an opening portion in which a part of the coil is disposed.

9. A vibration presentation device in which the vibration actuator according to claim 1 is disposed on a back side of an operation surface, wherein
the coil is energized in response to a touch operation of a user on the operation surface, and the movable portion is displaced so as to approach the fixed portion to present vibration.
